# EUROPEAN PATENT SPECIFICATION

(11) **EP 0 776 684 B1**
(45) Date of publication and mention of the grant of the patent: **17.10.2001**
(21) Application number: 96308579.0
(22) Date of filing: 27.11.1996
(51) Int. Cl.: A63H 33/22, A63H 33/30

(54) **Projection toy**
Spielzeugprojektor
Projecteur jouet

(30) Priority: 01.12.1995 JP 31443395
(43) Date of publication of application: 04.06.1997
(73) Proprietor: Sente Creations Co., Ltd., Bunkyo-ku, Tokyo (JP)
(72) Inventor: Kamei, Hiroyoshi, Tokyo (JP); Asami, Asayoshi, Kawasaki City (JP)
(74) Representative: Skone James, Robert Edmund

(56) References cited:
- EP-A- 0 330 703
- EP-A- 0 530 990
- US-A- 4 878 873

## Description

This invention relates to a projection toy that has a toy body and a screen.

Projectors that transmit light from a light source through a film, which is the material for displaying the design, and project the design on a screen are common. However, this type of projector only projects a certain image on a separate screen using the light from a light source. A projection toy has been developed that uses the same type of projection system as this projector. However, this toy does not simply project a certain image on the screen. The light source and material for displaying the designs are stored inside the toy body itself, such as a stuffed animal or doll. Moreover, part of the toy serves as the screen and the image on the material for displaying the design is projected onto this screen. As a result, an image is displayed with light from inside the toy and therefore, a projection toy is presented with a surface that appears white. This applicant has also developed a toy with which several images can be projected on a screen that is part of the toy in order to make this type of projection toy more interesting (Japanese Patent Application No. Hei 5 (1993) -203,749).

US-A-2634652 describes a photographic slide viewer in which the screen is defined by the underside of the viewer lid.

EP-A-0530990 describes a projection toy that has a light source within the toy body and a non-light-transmitting member having at least one light-transmitting part such that light from the said light-transmitting part is projected onto a surface.

In the former method, a projector or projection toy and a screen are needed and an image cannot be projected if there is no screen or another surface, such as a wall, for projecting the image.

On the other hand, this type of problem is not encountered when part of the toy serves as the screen. However, since the position of the screen cannot be changed, there are problems in that only designs of a certain size can usually be projected on this screen and it is impossible to change the size of the design when compared to the aforementioned type of system by means of which the distance between the projector and the projection toy and screen can be selected as needed.

In accordance with the present invention, a projection toy comprises a toy body and a screen; a light source within the toy body; and light-transmitting material for displaying designs positioned in the toy body in the path of the light emitted from the light source, wherein the screen is fastened to the toy body by a connector, whereby light from the light source is transmitted through the material for displaying designs and out of the toy body, the connector enabling the screen to be positioned at a plurality of orientations in the light path so that an image is projected on the screen.

The invention achieves the advantages of a separate screen by using a screen attached to the toy body by a special connector.

This invention provides a projection toy with which the image to be projected on the screen can be changed to make the toy more interesting. This is accomplished by using a screen that is separate from the toy body, but attached to the toy body using a connector which makes it possible to change the distance between the toy body and the screen as needed.

The connector may be connected to the toy body in a variety of ways, for example a sliding connection or the like. Preferably, however, the connector is pivoted to the toy body so as to pivot between the plurality of orientations.

Similarly, the screen can be fastened to the connector in a variety of ways either permanently or detachably. In the preferred arrangement, the screen and connector are joined via at least one tongue and groove so as to provide a detachable fastening. This allows the screen easily to be disassembled from the toy body for storage purposes and the like.

The connector may allow the screen to be continuously adjustable through a range of angles and be provided as a friction fit on the toy body so that the screen can be held at any angle. Preferably, however, the connector can be releasably locked in each of the plurality of positions which will typically be discrete, spaced positions.

In some cases, a separate locking device operable by the user could be provided to lock the connector in each of its plurality of positions but preferably the connector is made from an almost cylindrical part that can turn within a certain angle range around a horizontal shaft supported between a pair of protruding parts of the toy body, the connector and protruding parts having complementary recesses and projections which enable the connector to be locked in each of the plurality of orientations.

Typically, if the protruding parts are made of a resilient material such as plastics, the connector can be forcibly turned between successive ones of the plurality of positions so as to disengage the complementary recesses and projections which then snap back into engagement when the connector is located at its next position.

In some cases, the connector ensures that the screen is always located in the light path. However, in one preferred embodiment, the connector enables the screen to be moved to an orientation in which it does not intersect the light path so that the light can be projected on to another surface. With this arrangement, it is possible to project the light onto another surface such as a wall which may be preferred in certain circumstances.

In a further option, at least one reflecting surface is provided in the toy body to reflect light from the light source, and a turning means is provided that turns said reflecting surface inside the toy body. This enables the projected image to be varied by operating the turning means.

When the screen of the projection toy of this invention is fastened to the toy body using a detachable connector, the light emitted from the light source is transmitted through the light-transmitting material for displaying designs, which is in this light path, and an image of this design is projected onto the screen. The screen can be placed at any distance from the toy body and therefore, the image that is projected onto the screen can be changed by changing the distance between the toy body and the screen. This makes the toy more interesting to the person watching the screen.

By means of one form of this invention, the screen is fastened to the toy body by engaging a protrusion in the screen in a groove in the connector. Therefore, the screen can be removed from the toy body by disengaging the protrusion from the groove in the connector. As a result, it is possible to move the screen to any position away from the toy body and project an image of any size. Moreover, when the projection toy is not being used, the screen can be separated from the toy body and the toy body and screen can be stored without taking up extra space.

By means of another form of the projection toy, not only is an image of a design projected onto a screen by the light that has been transmitted from the light source through the material for displaying designs, but an image of a design is projected onto a screen also by the light from the light source that has been reflected with a reflecting surface and transmitted through the material for displaying designs. That is, several images projected by each type of light can be displayed on the screen and therefore, the beauty of the images and the surface white of the screen as a whole can be improved. When two or more reflecting surfaces in the shape of a polygonal tube are used, in addition to the minimum of three images, many images are projected around one central image by reflecting each image on each reflecting surface and therefore, the beauty and the surface white of the screen itself can be improved even further.

As a further enhancement, a music generator may be included within the toy body for generating musical sounds whenever the light source is activated. This is particularly useful when the projection toy is designed for infants, for example to be attached to an infant's cot or the like.

An example of a projection toy according to the invention will now be described with reference to the accompanying drawings, in which:-
Figure 1 is a perspective view of the projection toy from above and the front;
Figure 2 illustrates the main optical components;
Figure 3 is a perspective view of the toy when partly disassembled;
Figure 4 is an exploded view of the structure of the connecting part shown in Figure 3;
Figure 5 is a side view of the connector shown in Figure 4;
Figure 6 is a cross-section through the connector shown in Figure 4 when it is turning;
Figure 7 is a cross-section through the connector shown in Figured 4 when it is held in place on the toy body;
Figure 8 illustrates different positions of the screen relative to the toy body;
Figure 9 is a side view showing the projection toy when the screen is fastened almost level or horizontal and light emitted from the toy body hits the screen;
Figure 10 is a side view when the toy body is turned upside down and the light from the toy body hits the screen;
Figure 11 is a side view of the projection toy when the screen stands above the toy body and light from the window of the toy body hits a flat surface, such as a wall;
Figure 12 is a side view when the area around the toy is lit by light coming from the lighting window of the toy body;
Figure 13 is a perspective view showing the projection toy attached to a bedpost, etc., using a belt fastened to the back of the toy body; and
Figure 14 illustrates the outside of the belt fastened to the projection toy in Figure 13.

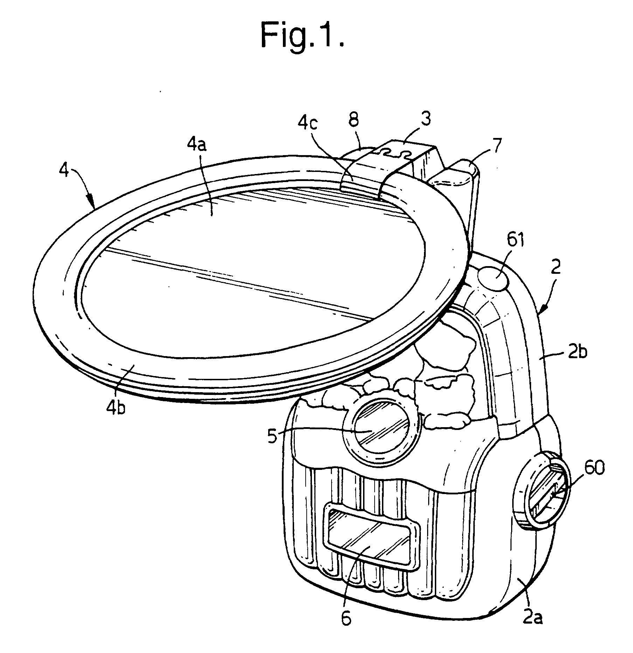

Figure 1 is a perspective view of the screen fastened to the projection toy. This projection toy has a toy body 2 and a screen 4 fastened to the toy body by connector 3. As will be mentioned later, screen 4 can be placed at any distance from toy body 2 over the path of light emitted from the light source inside toy body 2.

Toy body 2 is made by overlapping two parts with the same profile, that is a body part 2a for the front and a body part 2b for the back, and then attaching the two parts with some connection means, such as screws, etc. Front body part 2a has a design projection window 5 that is almost round and a lighting window 6 that is almost rectangular. The light that has been transmitted from the light source inside the toy body through light-transmitting material for displaying designs is irradiated to the outside through window 5, while light emitted from the same light source is irradiated directly to the outside through window 6. Furthermore, a pair of protruding parts 7 and 8 is formed on the top of overlapping body parts 2a and 2b. Connector 3 is fastened between these protruding parts so that it can turn.

Screen 4 is made from an annular part 4b that has on the inside a light-transmitting projection surface 4a, onto which an image is projected with the light emitted from approximately round window 5 of toy body 2. Part of this screen has a connecting part 4c, which can be connected and disconnected from connector 3 as needed, as will be mentioned later.

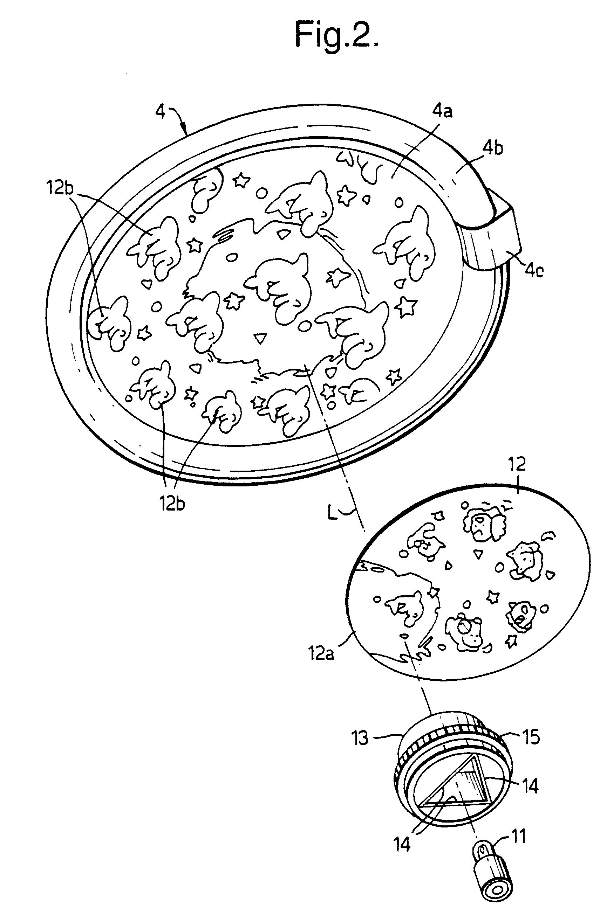

As shown in Figure 2, a light source 11, which is a light bulb (or another type of light-emitting part), is placed inside toy body 2 and material 12 for displaying designs, which is made from a film that is light-transmitting and on which designs like those illustrated have been drawn, is placed in light path L of light emitted from light source 11. In addition, the screen 4 is placed in the light path L (round window 5 (not shown) is placed somewhere along this path).

The material 12 is coupled by a means (not shown) to a mechanical drive motor operated via a coil spring which can be wound by rotating a control knob 60 (Figure 1). As the coil unwinds, the material 12 will slowly rotate causing designs to be scanned past the window 5.

The light bulb 11 is powered from batteries (not shown) which are connected to the light source when the knob 60 is rotated. In addition, a test button 61 is provided which can be depressed to connect the batteries to the light source without causing movement of the material 12 so that the light source can be tested.

Furthermore, reflecting material 13 with at least one (three in the example of Figure 2 with different colours) reflecting surface is placed between light bulb 11 and material 12 for displaying designs in the light path L inside toy body 2. Reflecting material 13 is made from cylindrical frame inside which there are three reflecting sheets 14 arranged in the shape of a triangle with their reflecting surfaces facing the inside. Consequently, the light that is transmitted from light source 11 through material 12 for displaying designs passes through the centre of cylindrical reflecting material 13 along light path L and separates into light that reaches a specific part of the design on material 12 for displaying designs and light that reaches another part of the design on material 12 for displaying designs. As a result, an image of specific design 12a on material 12 for displaying designs and an image of another design 12b from the light reflected by light reflecting sheets 14 of reflecting material 13 are projected onto screen 4.

By means of the structure in Figure 2, material 12 for displaying the designs is round and by turning this material 12 with some type of drive mechanism consisting of a motor and gears (not illustrated), the design that is projected onto the screen can be changed. Moreover, a gear part 15 is formed around the outside of the cylindrical frame of reflecting material 13. The gears of the drive mechanism (not illustrated) engage with this gear part to turn reflecting material 13. As a result, the designs projected onto screen 4 can be changed even more.

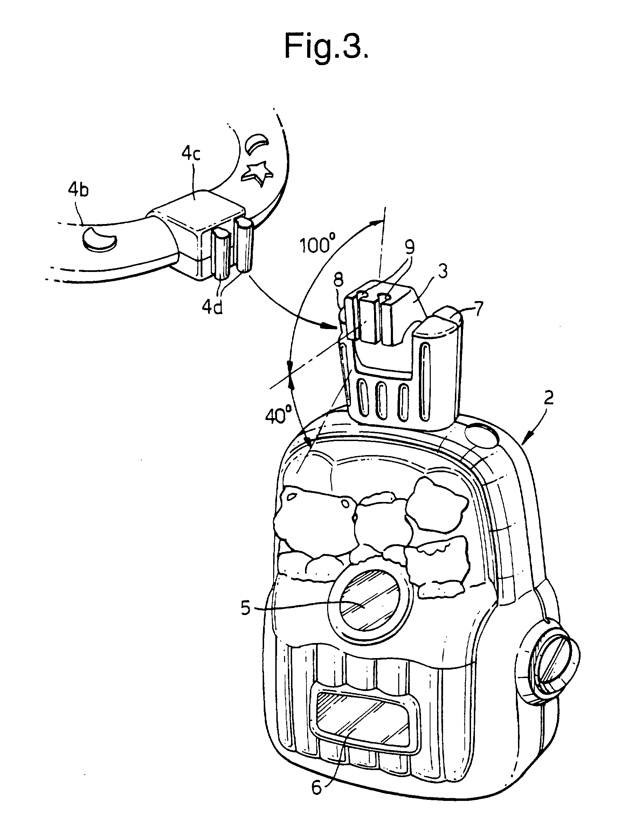

As shown in Figure 3, connector 3, mounted between a pair of protruding parts 7 and 8 at the top of toy body 2, can turn up and down within a specific angular range (in the illustrated example, within a range of from 100° up from level to 40° down from level). A pair of grooves 9 and 9 that extend vertically are made in the front of connector 3 and a corresponding pair of horizontally spaced, vertically extending protrusions (or tongues) 4d and 4d which engage with the pair of grooves 9 and 9 are formed on the outside of connecting part 4c of screen 4. Consequently, by slidably engaging this pair of protrusions 4d and 4d from the top with the pair of grooves 9 and 9 of connector 3, connecting part 4c of screen 4 is connected to connector 3 and screen 4 is fastened to toy body 2. The pair of protrusions 4d and 4d of connecting part 4c of screen 4 can be pulled from the pair of grooves 9 and 9 of connector 3 when screen 4 is removed from toy body 2.

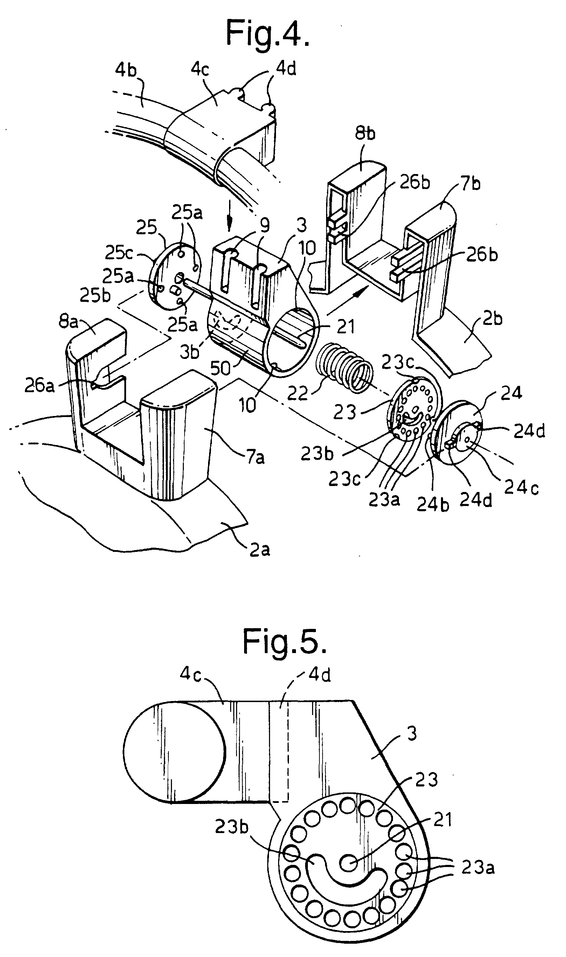

As shown in Figure 4, connector 3 has a cylindrical section 50 through which a horizontal shaft 21 extends, both ends of which are supported between top parts 7a and 7b and 8a and 8b of body parts 2a and 2b that form protruding parts 7 and 8 of toy body 2. A coil spring 22 is housed inside this cylindrical section and a disk 23 engages with one end. Coil spring 22 normally pushes disk 23 to the outside (toward protruding part 7 in Figure 4).

As shown in Figure 5, this disk 23 has several concave recesses 23a that are placed in a circle on the face outside an elliptical slot 23b for adjusting connector 3 so that it turns within a specific angular range, as previously mentioned. Furthermore, disk 23 has three notches 23c made around its outer edge (Figure 4). Disk 23 turns as one unit with connector 3 when knobs 10 that protrude radially inwardly within the cylindrical section of connector 3 engage with these notches 23c.

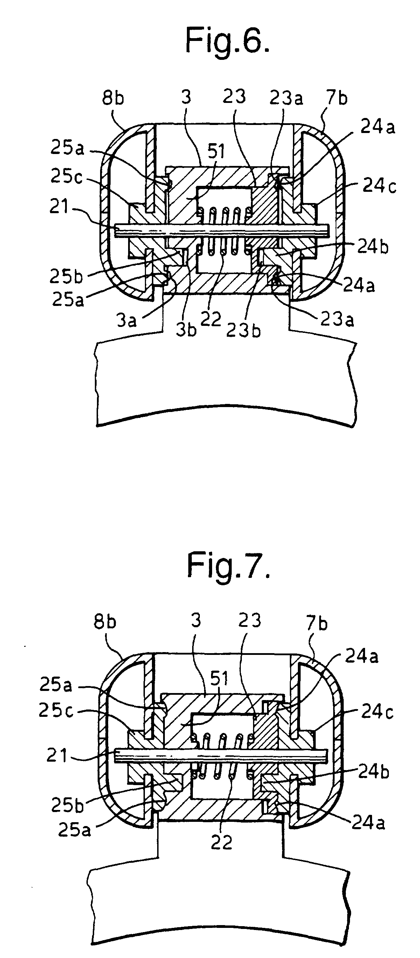

As shown in Figures 6 and 7, the cylinder end on the opposite side of connector 3 from disk 23 forms a closed surface 51. There is a hole for horizontal shaft 21 in the centre of this wall 51 and several concave parts 3a formed in a circle on the outside, as with concave parts 23a of aforementioned disk 23, as well as an elliptical slot 3b.

On the other hand, there are plates 24 and 25 on the inside of the pair of protruding parts 7 and 8 of toy body 2. Plates 24 and 25 have several (four in the illustrated example) convex parts 24a, 25a respectively, which engage respectively with corresponding concave parts 23a in disk 23 and corresponding concave parts 3a on the wall 51, and knobs 24b and 25b, which loosely engage respectively with slits 23b and 3b of the disk 23 and the wall 51, in the surface facing the end of the cylinder on the opposite side of disk 23 and connector 3, respectively.

Furthermore, each of these plates 24,25 has a circular flange 24c,25c and a pair of knobs 24d,25d (Figure 4) which protrude to both sides in the direction of their diameter, in the surface corresponding to protruding parts 7 and 8, respectively. By engaging the pair of knobs 24d and 25d with grooves 26a and 26b, which are formed in the corresponding top parts 7a and 7b and 8a and 8b of body parts 2a and 2b, as shown in Figure 4, plates 24 and 25 are attached to protruding parts 7 and 8 of body parts 2a and 2b, respectively.

By means of the aforementioned connection, screen 4 is fastened so that it can turn within a certain range and can be held at a certain angle with respect to toy body 2. That is, when connecting part 4c of screen 4 is connected to connector 3 and screen 4 is fastened to toy body 2, connector 3 can turn around horizontal shaft 21, which is supported between the pair of protruding parts 7 and 8 if the convex parts 24a and 25a of plates 24 and 25 on the two sides of toy body 2 are not engaged with corresponding concave parts 23a of disk 23 on one end of connector 3 and concave parts 3a on the other end (Figure 6). Consequently, screen 4 is turned freely up and down by hand or by gravity. However, the range of this motion is determined by the length of elliptical slots 23b and 3b on the connector 3 side with which knobs 24b and 25b on the toy body 2 side engage.

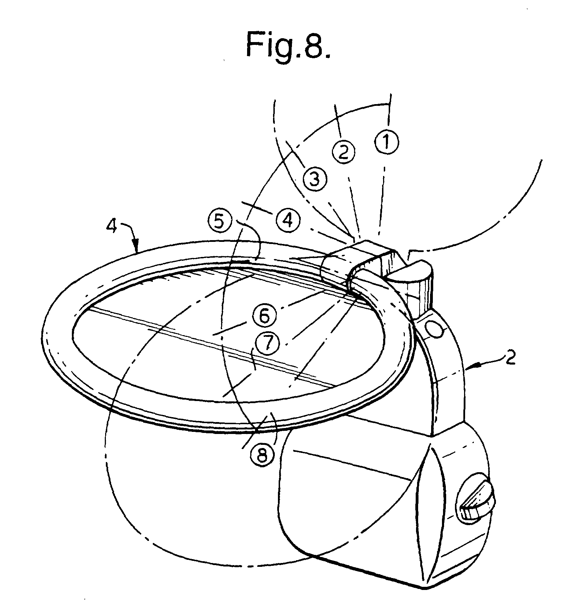

In contrast to this, when the convex parts 24a and 25a in plates 24 and 25 of toy body 2 snap into engagement with the corresponding concave parts 23a of disk 23 on one end of connector 3 and the concave parts 3a on the other end, respectively (Figure 7), connector 3 is held in place by this engagement of convex and concave parts. Consequently, screen 4 is also held in place. However, as shown in Figure 5, its position is determined from the position of the several (eight in the illustrated example) concave parts 23a along elliptical slot 23b on the connector 3 side. That is, in this example, the screen can be held in any of the eight positions shown by (1) through (8) within the aforementioned range of motion (up 100° from level and down 40° from level, see Figure 8).

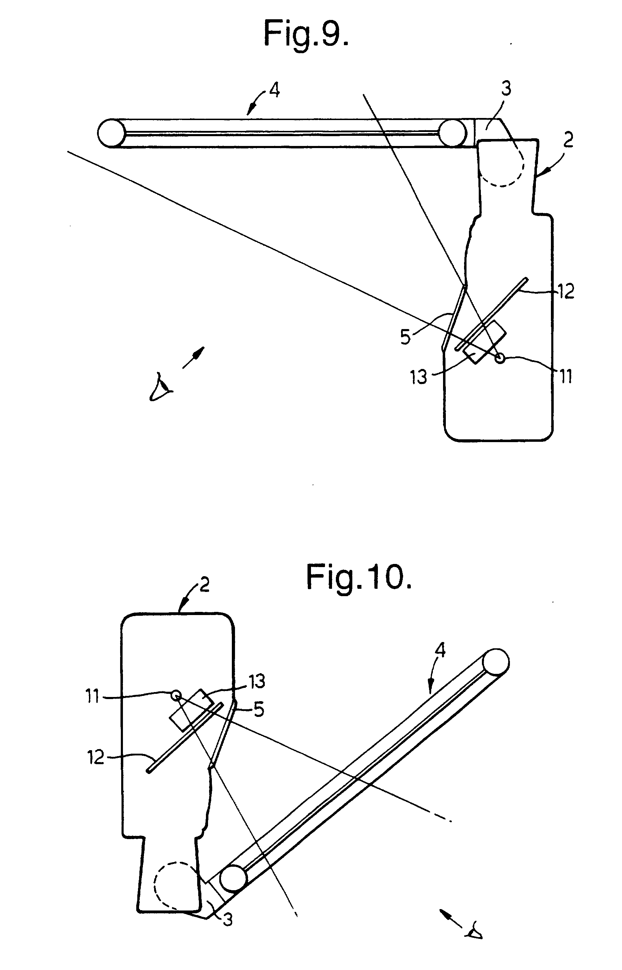

Furthermore, as shown in Figure 9, when screen 4 is, for instance, held level, which is position (6) in Figure 8, the light that has passed through reflecting material 13 from light source 11 inside toy body 2, or the light that has been reflected inside reflecting material 13, is transmitted through material 12 for displaying designs and goes through window 5 to project an image of the design on screen 4.

Moreover, as shown in Figure 10, the projection toy can have toy body 2 with its top and bottom reversed. In this case, the image of the design is projected onto screen 4 from above.

In any case, since screen 4 can be held at various distances from toy body 2 and the distance between toy body 2 and screen 4 can be changed, the toy can be made more interesting by changing the size, etc., of the image projected onto the screen.

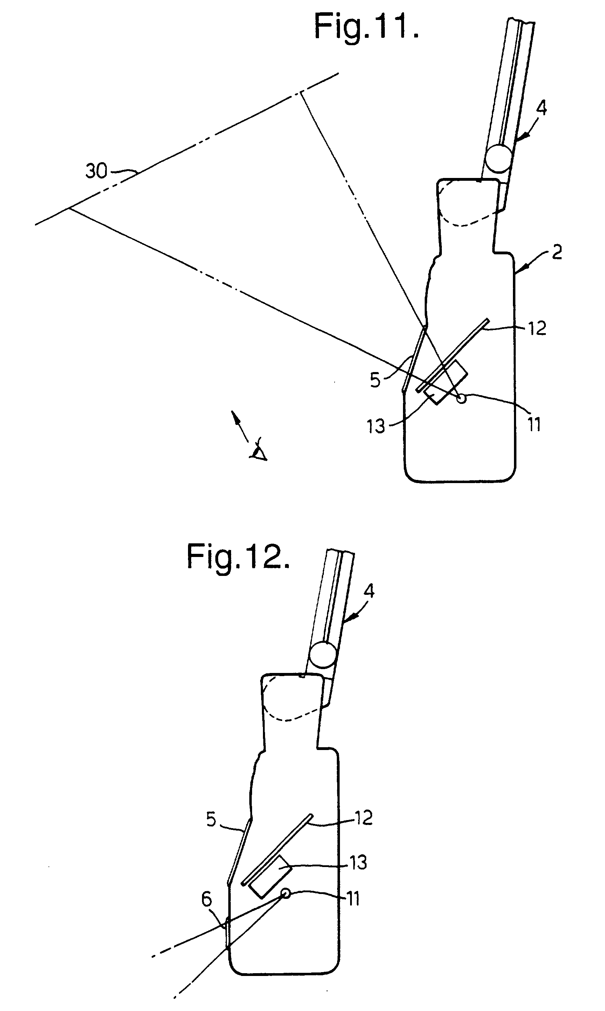

In addition, as shown in Figure 11, by standing screen 4 upright above toy body 2, it is possible to project an image of the designs onto a flat surface 30 such as a wall, with the light that passes through window 5 of body 2.

Furthermore, as shown in Figure 12, this projection toy can also be used as a lighting toy that lights the area around the toy with light emitted through the other window 6 without passing the light through design projection window 5 of toy body 2, that is, without transmitting the light through material 12 for displaying designs.

Although not shown, the toy may also include a music module coupled with the knob 60 so that when the knob is turned to activate the light source 11 and material 12, it also connects the batteries to the music module which simultaneously plays stored music.

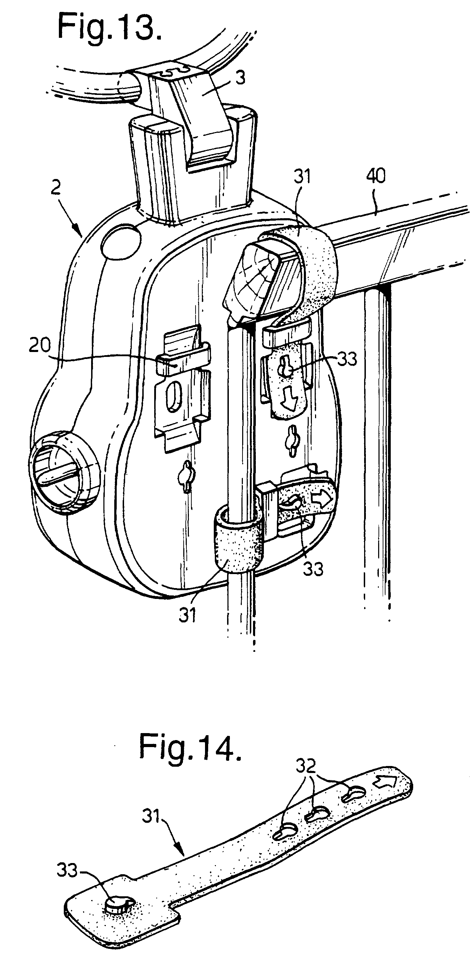

Moreover, as shown in Figure 13, this projection toy has belt fastener 20 through which belt 31 can pass, as shown in Figure 14, at one or more positions on the back of toy body 2. Furthermore, belt 31 that goes through this belt fastener 20 can, for instance, be wrapped around the rail or support 40 of a crib and fastened to the crib by inserting clamp 33 into the appropriate hole 32 of the belt. As a result, the crib becomes more interesting to children.

## Claims

1. A projection toy having a toy body (2) and a screen (4); a light source (11) within the toy body (2); and light-transmitting material (12) for displaying designs positioned in the toy body (2) in the path of the light emitted from the light source (11), whereby light from the light source (11) is transmitted through the material (12) for displaying designs and out of the toy body (2), **characterised in that** the screen (4) is fastened to the toy body (2) by a connector (3), the connector (3) enabling the screen (4) to be positioned at a plurality of orientations in the light path so that an image is projected on the screen (4).

2. A projection toy according to claim 1, wherein the connector (3) is pivoted to the toy body (2) so as to pivot between the plurality of orientations.

3. A toy according to claim 1 or claim 2, wherein the connector (3) can be releasably locked in each of the plurality of positions.

4. A toy according to claim 3, wherein the connector (3) is made from an almost cylindrical part that can turn within a certain angle range around a horizontal shaft supported between a pair of protruding parts of the toy body (2), the connector (3) and protruding parts having complementary recesses and projections which enable the connector (3) to be locked in each of the plurality of orientations.

5. A toy according to claim 4, wherein the recesses and projections are arranged around a circular locus.

6. A toy according to any of the preceding claims, wherein the connector (3) enables the screen (4) to be moved to an orientation in which it does not intersect the light path so that the light can be projected on to another surface.

7. A toy according to any of the preceding claims, wherein the screen (4) and connector (3) are detachable, for example being joined via at least one tongue and groove.

8. A toy according to any of the preceding claims, wherein at least one reflecting surface is provided in the toy body (2) to reflect light from the light source (11), and a turning means is provided that turns said reflecting surface inside the toy body (2).

9. A toy according to claim 8, wherein there are three or more of the aforementioned reflecting surfaces and these are arranged in the shape of a polygonal tube.

## Patentansprüche

1. Projektionsspielzeug mit einem Spielzeugkörper (2) und einem Bildschirm (4); einer Lichtquelle (11) im Innern des Spielzeugkörpers (2) und lichtdurchlässigem Material (12) zur Darstellung von Designs, die im Spielzeugkörper (2) im Weg des von der Lichtquelle (11) ausgestrahlten Lichtes angeordnet sind, bei dem Licht von der Licht von der Lichtquelle (11) durch das Material (12) und aus dem Spielzeugkörper (2) heraus gelassen wird, um Designs darzustellen, **dadurch gekennzeichnet, daß** der Bildschirm (4) durch ein Verbindungsstück (3) am Spielzeugkörper (2) befestigt ist, wobei es das Verbindungsstück (3) ermöglicht, den Bildschirm (4) in einer Vielzahl von Ausrichtungen im Lichtweg zu positionieren, so daß ein Bild auf den Bildschirm (4) projiziert wird.

2. Projektionsspielzeug nach Anspruch 1, bei dem das Verbindungsstück (3) schwenkbar am Spielzeugkörper (2) angeordnet ist, um zwischen der Vielzahl von Ausrichtungen verschwenkt zu werden.

3. Spielzeug nach Anspruch 1 oder 2, bei dem das Verbindungsstück (3) lösbar in jeder der Vielzahl von Ausrichtungen arretiert werden kann.

4. Spielzeug nach Anspruch 3, bei dem das Verbindungsstück (3) aus einem nahezu zylindrischen Teil besteht, das innerhalb eines bestimmten Winkelbereichs um eine waagrechte Welle drehen kann, die zwischen einem Paar vorstehender Teile mit komplementären Aussparungen und Vorsprüngen gelagert ist, die es ermöglichen, das Verbindungsstück (3) in jeder der Vielzahl von Ausrichtungen zu arretieren.

5. Spielzeug nach Anspruch 4, bei dem die Aussparungen und Vorsprünge um einen kreisförmigen Ort herum angeordnet sind.

6. Spielzeug nach einem der vorstehenden Ansprüche, bei dem es das Verbindungsstück (3) ermöglicht, den Bildschirm (4) in eine Ausrichtung zu bewegen, in der er den Lichtweg nicht schneidet, so daß das Licht auf eine andere Oberfläche projiziert werden kann.

7. Spielzeug nach einem der vorstehenden Ansprüche, bei dem der Bildschirm (4) und das Verbindungsstück (3) trennbar sind, beispielsweise durch eine Verbindung über mindestens eine Feder und Nut verbunden sind.

8. Spielzeug nach einem der vorstehenden Ansprüche, bei dem mindestens eine reflektierende Oberfläche im Spielzeugkörper (2) vorgesehen ist, um Licht von der Lichtquelle (11) zu reflektieren, sowie eine Dreheinrichtung, die diese reflektierende Oberfläche in das Innere des Spielzeugkörpers (2) dreht.

9. Spielzeug nach Anspruch 8, bei dem drei oder mehr der oben genannten reflektierenden Oberflächen vorgesehen und in Form eines vieleckigen Rohres angeordnet sind.

## Revendications

1. Projecteur jouet comportant un corps de jouet (2) et un écran (4) ; une source de lumière (11) à l'intérieur du corps de jouet (2) ; et un matériau transmetteur de lumière (12) pour afficher des dessins placés dans le corps de jouet (2) dans le trajet de la lumière émise depuis la source de lumière (11), grâce à quoi la lumière provenant de la source de lumière (11) est transmise à travers le matériau (12) pour afficher des dessins et vers l'extérieur du corps de jouet (2), **caractérisé en ce que** l'écran (4) est fixé sur le corps de jouet (2) par un connecteur (3), ledit connecteur (3) permettant de positionner l'écran (4) sous une pluralité d'orientations dans le trajet de lumière de sorte qu'une image est projetée sur l'écran. (4).

2. Projecteur jouet selon la revendication 1, dans lequel le connecteur (3) est monté pivotant sur le corps de jouet (2) de façon à pivoter entre la pluralité d'orientations.

3. Projecteur jouet selon l'une ou l'autre des revendications 1 et 2, dans lequel le connecteur (3) peut être bloqué de façon libérable dans chacune de la pluralité de positions.

4. Projecteur jouet selon la revendication 3, dans lequel le connecteur (3) est réalisé à partir d'une partie pratiquement cylindrique capable de tourner dans une certaine plage angulaire autour d'un arbre horizontal supporté entre une paire de parties en projection du corps de jouet (2), le connecteur (3) et les parties en projection ayant des évidements et des projections complémentaires qui permettent au connecteur (3) d'être bloqué dans chacune de la pluralité d'orientations.

5. Projecteur jouet selon la revendication 4, dans lequel les évidements et les projections sont agencés autour d'un lieu circulaire.

6. Projecteur jouet selon l'une quelconque des revendications précédentes, dans lequel le connecteur (3) permet de déplacer l'écran (4) à une orientation dans laquelle il ne recoupe pas le trajet de lumière, de sorte que la lumière peut être projetée sur une autre surface.

7. Projecteur jouet selon l'une quelconque des revendications précédentes, dans lequel l'écran (4) et le connecteur (3) sont détachables, en étant par exemple réunis via au moins une languette et une rainure.

8. Projecteur jouet selon l'une quelconque des revendications précédentes, dans lequel au moins une surface réfléchissante est prévue dans le corps de jouet (2) pour réfléchir la lumière provenant de la source de lumière (11), et il est prévu des moyens de rotation qui font tourner ladite surface réfléchissante à l'intérieur du corps de jouet (2).

9. Projecteur jouet selon la revendication 8, dans lequel sont prévues trois ou plusieurs desdites surfaces réfléchissantes précitées, et celles-ci sont agencées sous la forme d'un tube polygonal.
